# EUROPEAN PATENT SPECIFICATION

(11) **EP 4 596 171 B1**
(45) Date of publication and mention of the grant of the patent: **07.10.2026**
(21) Application number: 25153231.3
(22) Date of filing: 22.01.2025
(51) Int. Cl.: B27C 5/06, B27G 21/00

(54) **MACHINE FOR MACHINING BEAMS HAVING A PROTECTION SYSTEM, AND OPERATING METHOD THEREOF**
MASCHINE ZUR BEARBEITUNG VON BALKEN MIT EINER SCHUTZVORRICHTUNG, UND ENTSPRECHENDES ARBEITSVERFAHREN
MACHINE D'USINAGE DE POUTRES AVEC UN SYSTEME DE PROTECTION, ET METHODE D'OPERATION CORRESPONDANTE

(30) Priority: 30.01.2024 IT 202400001815
(43) Date of publication of application: 06.08.2025
(73) Proprietor: SCM Group S.p.A., 47921 Rimini (RN) (IT)
(72) Inventor: VELTRONI, Fabio, 47921 RIMINI (RN) (IT); LUCHE, Christian, 47921 RIMINI (RN) (IT)
(74) Representative: Tiburzi, Andrea

(56) References cited:
- EP-A1- 3 804 930
- EP-A2- 2 067 586
- DE-A1- 102015 009 879

## Description

The present invention concerns carpentry machines, in particular a carpentry working center for machining beams, lintels, cantilevers, columns, modular panels, or other large pieces.

### Field of invention

More in detail, the invention concerns a carpentry machine of the aforementioned type, designed and built in particular to work wooden beams, but which can be used for any machining of carpentry pieces, of which it is necessary to reduce the overall dimensions and of which it is needed to adapt the maximum size according to the size of the piece to be machined, in a predefined period of time.

In the following, the description will be aimed at a CNC-type carpentry work center, but it is clear that it should not be considered limited to this specific use.

### Prior art

As is well known, construction machinery, and in particular, CNC-type working centers for wood, are innovative technological solutions, specifically designed for the production of structural beams, columns, walls and floors, prefabricated walls, roofs and insulating panels.

EP3 804 930 A1 discloses a machine according to the preamble of claim 1.

Such machines are designed to offer high precision in the production of finished elements, flexibility in machining different geometries or dimensions and high productivity.

There are currently CNC working centers on the market for the production of large structural beams and wall panels, for example with a width of up to 12.5 mm and a length of up to 16 m, in which said working centers comprise an operating unit 6-axis machine capable of machining each of the six faces of the beam in a single positioning and without the need to perform flipping.

These working centers provide the option of performing synchronized movements aimed at obtaining high processing speeds and guaranteeing high quality of the finished product.

In particular, CNC type carpentry machines equipped with a 6-axis symmetrical operating unit, which allows the head and tail of each element to be machined in conditions of minimal overhang are becoming widespread.

Nonetheless, these machines are not designed for machining large beams, for example larger than 16 meters and therefore require specific adaptations to adapt the machine to the specific beam to be machined. On the other hand, however, said adaptations are limited by the space in which the machine is located and by any remaining free space in the room, in which it is located.

Furthermore, these machines offer high machining precision, constant over time, for beams of standard dimensions, i.e. dimensions for which these machines were designed, also thanks to the fact that the base is fixed directly to the ground, guaranteeing high stability and performance.

Furthermore, there are machines and working centers for carpentry equipped with automatically closing covers capable of physically separating the work area from the external environment, eliminating machine downtime due to restoring the work environment. These machines often involve the use of automatically closing gates, which rise to allow the passage of beams of dimensions exceeding the dimensions of the machine itself and which are lowered, by means of automatic pistons, where the beams have a standard dimension, i.e. capable to be contained inside the machine.

However, as the size of the beams to be machined increases, the use of an additional roller conveyor is often required to avoid vibrations of the end of the beam, which implies additional dimensions in the machine installation site.

Furthermore, the presence of such systems to increase the dimensions of the machine when necessary requires poles and/or systems constantly present at the installation site, and that therefore increases the overall dimensions of the machine.

The need to provide a compact carpentry machine capable of guaranteeing stability for the machining of beams and the like appears evident.

Also evident is the need to temporarily increase the size of a machine dedicated to house a beam to be machined, in which said beam has dimensions exceeding the standard size, i.e. it has dimensions greater than the capacity of the machining machine to accommodate said beams.

### Purpose of the invention

In light of the above, it is, therefore, the aim of the present invention to provide a machine for machining beams, in which the machine is adaptable to the size of the beam to be machined.

A further aim is to minimize the size of a machine for machining beams.

A further purpose is to provide a system for expanding and reducing a loading and/or unloading area of a carpentry work center. In particular, the aim of the present invention is to expand the loading and/or unloading area by moving one or more walls, or fences, protecting the loading and/or unloading area, in which the walls are movable along the main direction of the work center, which corresponds to the main direction along which the beam to be machined extends.

A further purpose of the present invention is to provide the tools necessary for carrying out an operating method of this machine.

### Object of the invention

These and other results are obtained according to the invention with a carpentry machine equipped with fences and a fence positioning system adaptable to the dimensions of the pieces to be machined and the space in which said machine is located.

It is, therefore, specific object of the present invention a achine for machining wooden beams or the like comprising a loading platform to load a beam to be machined, an unloading platform of said machined beam, a work cabin, in which said beam is machined, placed between said loading plane and said unloading plane, at least one protective lateral wall arranged near said loading platform and/or said unloading platform, and at least one barrier arranged not parallel to said at least one lateral wall, wherein said machine is characterized in that it comprises a system for positioning said at least one barrier, wherein said positioning system is capable of moving said at least one barrier so that it can assume a close position, wherein said at least one barrier is arranged at a predefined distance from said work cabin, and one or more distant positions, wherein said at least one barrier is further distanced from said work cabin.

Therefore, the specific object of the present invention is a machine and a method of operation thereof, defined respectively in claims 1 and 9.

Preferred embodiments are defined in the dependent claims.

### Brief description of the figures

The present invention will be now described, for illustrative but not limitative purposes, according to its preferred embodiments, with particular reference to the figures of the enclosed drawings, wherein:
figure 1 shows a perspective view of a machine for machining beams equipped with a positioning system according to the present invention;
figure 2 shows the machine of figure 1 in a standard overall configuration in which the size of the loaded beams does not require increasing the space dedicated to loading and unloading the beams;
figure 3 shows a perspective view of the detail of a blocking mechanism for at least one barrier and of an operating mechanism having a guide on which said barrier slides;
figure 4 shows a perspective view equipped with a system for positioning two protection barriers according to the present invention;
figure 5 shows a perspective view of a barrier blocking mechanism according to the present invention;
figure 6 shows a perspective view of a barrier integral with a mobile portion of a side wall of a machine for machining beams according to the present invention;
figure 7 shows a detail of a latch that engages with a dowel to secure an operating position of the machine according to the present invention;
figure 8 shows a perspective view of a beam machining machine according to the prior art; and
figure 9 shows a top view of a beam machining machine according to the prior art.

### Detailed description

In the various figures, the similar parts will be indicated with the same numerical references.

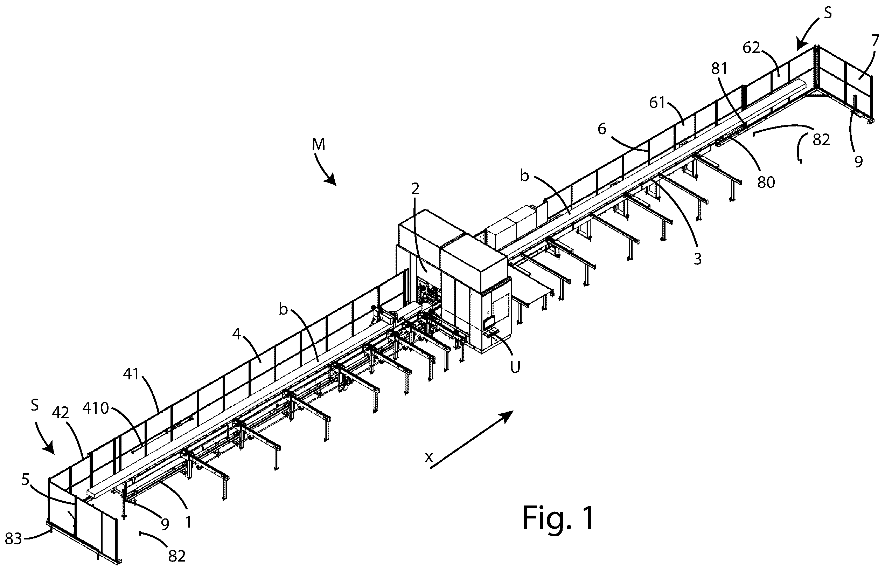

Referring to figure 1, a CNC machining center for carpentry is shown equipped with a work cabin 2 positioned between a loading surface 1 and an unloading surface 3.

The CNC machining center, or machine M, of figure 1 essentially comprises a work cabin 2, in which it is possible to machine a beam b, a loading surface 1 on which the beam b to be machined is loaded, and an unloading surface 3, from which the beam b is unloaded once the processing has been carried out using the machine M.

Said loading surface 1 is arranged along a direction X, along which the main dimension of said machine M extends.

Said loading platform 1 is connected to the work cabin 2.

The unloading surface 3 shown in figure 1 is arranged along the X direction, in contact with said work cabin 2.

According to some embodiments, the unloading surface 3 can be in direct contact with said loading surface 1 and with the work cabin 2.

The machine M also comprises at least one side wall 4, 6 to prevent said beam b, when positioned on said loading surface 1 or on said unloading surface 3, from contacting users and/or objects in the vicinity of said machine M.

In other words, the side walls 4 and 6 are protections to confine the beam b and prevent it from coming into contact with the user who works on it or from hitting other objects present in the installation site of the machine M.

Said side walls are arranged parallel to the machine M and, therefore, to the beam b loaded on it.

According to a preferred embodiment, the two side walls 4 are arranged along the X direction to confine a space around the loading surface 1 and two side walls 6 are arranged along the X direction to confine a space around the unloading surface 3.

Although within this description reference is made to a (first) side wall 4 near the loading surface 1 and to a (further) side wall 6 near the unloading surface 3, according to some embodiments it is to be understood that there are a first pair of lateral walls 4 and a further pair of lateral walls 6 arranged respectively in a diametrically opposite position with respect to the beam b that isolate from the outside.

Furthermore, the machine comprises at least one barrier 5, 7 movable along said direction combined with the relevant side wall, form an area that isolates said beam b from the outside. In other words, each barrier 5, 7 is inclined by a non-zero angle with respect to the respective lateral wall 4, 6.

According to some preferred embodiments, each of said barriers 5, 7 is arranged substantially orthogonal to the corresponding lateral wall 4, 6.

According to some embodiments, the barrier 5 is interposed between a pair of lateral walls 4, wherein each wall 4 of said pair of lateral walls 4 extends along each side of the main dimension of the beam b to be machined, to create a fence around the loading area 1.

Similarly, according to some preferred embodiments, the barrier 7 is also interposed between a pair of lateral walls 6, wherein each wall 6 of said pair of lateral walls 6 extends along each side of the main dimension of the machined beam, to create a fence around the unloading area 3.

Furthermore, both the barrier 5, 7 and the lateral wall 4, 6 are preferably arranged orthogonal to the ground.

The machine M includes a system S for positioning said at least one barrier 5, 7.

According to some embodiments, said system S allows the positioning of a single pair of walls and barriers, for example wall 4 and barrier 5, or wall 6 and barrier 7.

In a preferred embodiment, the S system is able to position both pairs of walls and barriers to ensure maximum flexibility both during loading and unloading.

The positioning system S for the carpentry work center of the present invention essentially comprises lateral walls 4 and 6, for example walls having a similar appearance to a bulkhead or a guardrail, equipped with guides and a sliding area along these guides to move the walls 4, 6 so as to widen the loading area 1 and/or unloading 3 of the beams b in which the walls 4, 6 are fixed.

According to some preferred embodiments, said guides are guides arranged on the ground.

According to some embodiments, said walls 4, 6 are fixed at a predetermined distance from the work cabin 2 arranged between the loading area 1 and the unloading area 3 of the beam b to be machined.

According to some embodiments, the positioning system S comprises one or more barriers and/or movable walls each arranged on a guide equipped with coded sensors to identify one or more dimensions of a beam.

In a preferred form, said guide is equipped with two sensors in correspondence with two predetermined dimensions of beams b to be machined by said machine M. For example, the sensors can be arranged at a distance such as to recognize whether a beam b has the same or greater dimension of 13.5 m, or equal to or greater than 16 m.

According to some embodiments, for example for compact machines for machining beams of generally smaller dimensions, the presence of at least a first sensor is provided at a distance from the work cabin 2 capable of recognizing when the beams to be machined exceed the 9 m.

According to some embodiments, the machine M comprises at least one guide for the portion of the machine M dedicated to loading the beams to be machined and at least one guide for the portion of the machine dedicated to unloading the beams machined by the machine M.

Each of said guides can include one or more first sensors capable of detecting if a beam b exceeds the maximum size that can be machined by the machine M without this machining causing potential risks to the user or to machine M.

Some embodiments provide at least one second sensor, wherein said at least one second sensor comprises at least one photocell 9 arranged on the wall, for example, fixed or resting on it, and/or at least one radio frequency identification device capable of identify the position at which the barriers 5, 7 and/or the walls 4, 6 are located with respect to the work cabin 2.

The machine M comprises a control logic unit U configured to manage the operation of the machine.

Said logic unit U is also capable of receiving the data detected by said at least one first sensor and by said at least one second sensor 9, and capable of determining whether at least one of said barriers 5, 7 and/or at least one of said walls 4, 6 is in a position such as to house the beam or if it is required to increase the size of the machine M, that is, to move said at least one barrier 5, 7 away from the work cabin 2 in such a way as to temporarily increase the size of the machine M to accommodate the beam b.

The logic unit U can be configured to inform, via visual and/or acoustic alarms, when it is necessary to change the size of the machine M.

According to some embodiments, the logic control unit U can activate and/or deactivate a blocking mechanism 8 of the barrier 5, 7 and/or of the wall 4, 6 to fix said barrier 5, 7 at a desired distance and in operation of the size of the beam b to be machined or machined.

In particular, said blocking mechanism can be controlled by the logic unit U or pre-programmed to respond, i.e. to open or close, depending on the data received from the first and second sensors.

Furthermore, the wall blocking mechanism 8 can include latches 83 which engage with holes 82 or wells arranged, for example, along the horizontal base of the machine, or other devices capable of binding to such wells 82 to block the walls .

The locking system 8 involves the coupling between one or more wells 82 and a rod or latch 83, which penetrates said wells.

According to some embodiments, as described below, the positioning system S is essentially a sliding system of said two lateral walls 4, 6, or of the respective mobile lateral protections 42, 62, described below.

In particular, said side walls can be a first side wall 4, near the loading surface 1 and a further side wall 6 near the unloading surface 3.

According to some embodiments, said first side wall 4 comprises a first fixed lateral protection 41 and a first mobile protection 42, telescopically coupled to the first fixed lateral protection 41 and having one end coupled or in contact with the barrier 5.

Similarly, said further side wall 6 can comprise a further fixed lateral protection 61 and a further mobile protection 62, telescopically coupled to the further fixed lateral protection 61 and having one end coupled or in contact with the barrier 7.

The positioning system S can comprise means for the sliding of at least one of the mobile protections, which provide a guide arranged 80 on the ground, a limit switch 81 arranged in correspondence with the locking system 8 and/or a pulley which, through the rotation of a pulley included in it, activates the sliding of the lateral protections 42, 62 and, consequently of the respective barriers 5, 7, with respect to the fixed lateral protections 41, 61.

According to some embodiments, the positioning (sliding) system comprises members or means for sliding both lateral protections 4 and 6.

Said sliding members or means comprise at least a cable and a pulley, a piston or other drive mechanism to activate the relative sliding of at least one of said two mobile lateral protections 42, 62 with respect to the relative fixed protection 41, 61.

In particular, a first operating mechanism allows the translation of the mobile lateral protection 42 with respect to the fixed protection 41.

Similarly, a second driving mechanism can determine the sliding of the mobile lateral wall 62 with respect to the fixed protection 61.

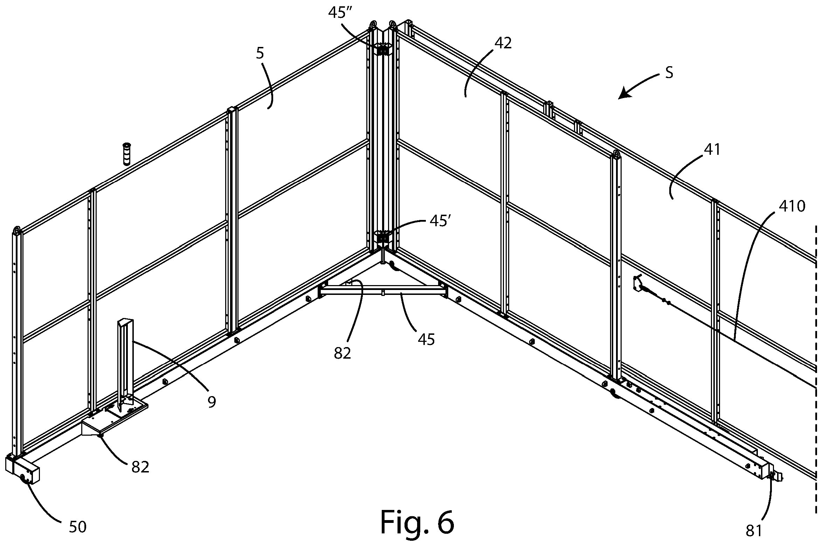

Furthermore, figure 6 shows an emergency switch for industrial machines equipped with a rope indicated with the reference 410.

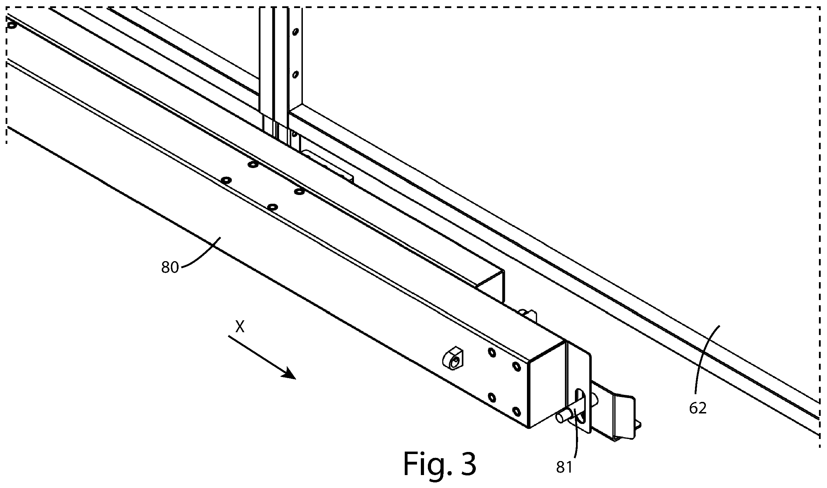

Although the embodiment shown in figure 3 shows the guide 80 and the limit switch 81 arranged exclusively in correspondence with the mobile lateral protection 62, said guide 80 and said limit switch 81 can also be arranged in correspondence with the barrier 5 and the lateral protection 42.

According to some embodiments, the blocking mechanism 8 comprises a latch 83 capable of engaging with a hole 82 in the ground and/or along the horizontal base of the machine M.

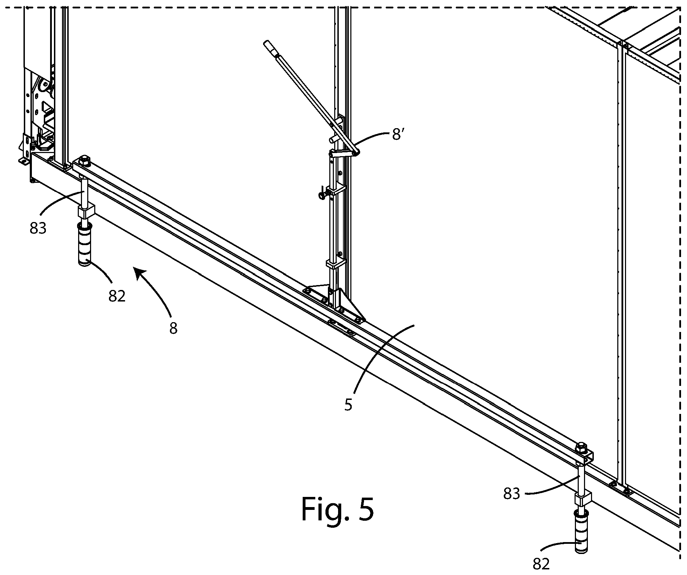

As can be seen from figure 5, the blocking mechanism 8' can be mounted on an external face of the barrier 5, i.e. the face of said barrier 5 furthest from the beam to be machined b, so as to facilitate access to the user without the latter having to come into contact with the beam b, for example to block or free the latches 83 from the holes 82, to which they connect.

Similarly, although not shown in the figures, the blocking mechanism 8' can be mounted on an external face of the barrier 7, i.e. the face of said barrier 7 furthest from the machined beam b', so as to facilitate access to the user without the latter having to come into contact with the beam b', for example, to block or free the latches 83 from the holes 82 with which they engage.

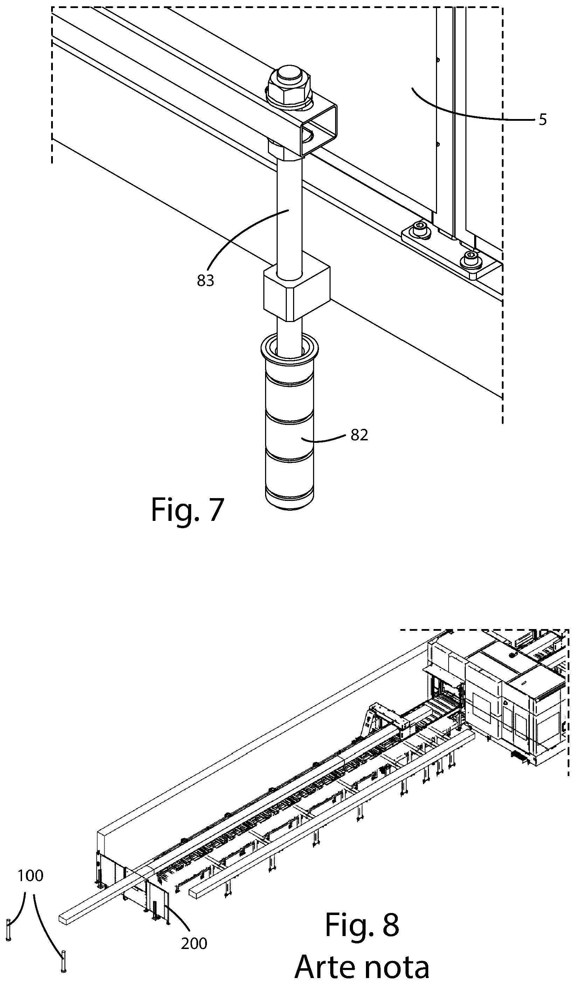

Furthermore, referring again to figure 5, two latches 83 are shown, which engage with two holes 82; an enlargement of a latch 83 entering a hole 82 is also shown in figure 7.

Referring to figure 6, the (first) barrier 5 near the loading surface 1 and the first mobile lateral protection 42 are arranged orthogonal to each other and connected by a bar 45.

Said bar 45 can be screwed or welded to the two frames of the barrier 5 and the mobile lateral protection 42.

Furthermore, each of the barriers 5, 7 can be connected to the respective mobile lateral protection 42, 62 by means of further connections, for example, magnets or hinges 45' and 45" to ensure greater stability of the coupling.

Again, referring to figure 6, said barrier 5 comprises one or more wheels 50 for moving it along the X axis.

Similarly, the barrier 7 can also comprise wheels 50 to be moved along the X axis.

Furthermore, photocell 9 is preferably a front photocell in proximity to at least one of the two barriers 5, 7 which is moved integrally with the corresponding barrier, i.e. by translating it.

The presence of said central photocell 9 allows the machine's movements to be stopped and the work area to be delimited in correspondence with the loading and/or unloading surface.

Referring again to figure 5, the machine comprises an external sensor 92 near the blocking mechanism 8', which detects the correct locking of the latches 83 inside the respective holes 82, or wells.

In particular, the blocking mechanism 8 is configured to lock the protective lateral walls 4, 6 at a predetermined distance, in such a way as to offer an alternative solution to doweled ground sealing systems, in which the walls are moved manually to increase the loading and/or unloading area of the beam to be positioned, for example on a roller conveyor or other handling device, or economically expensive solutions, in which the sealing systems with anchoring to the ground comprise gates 200 that rise and they lower by automatic pistons.

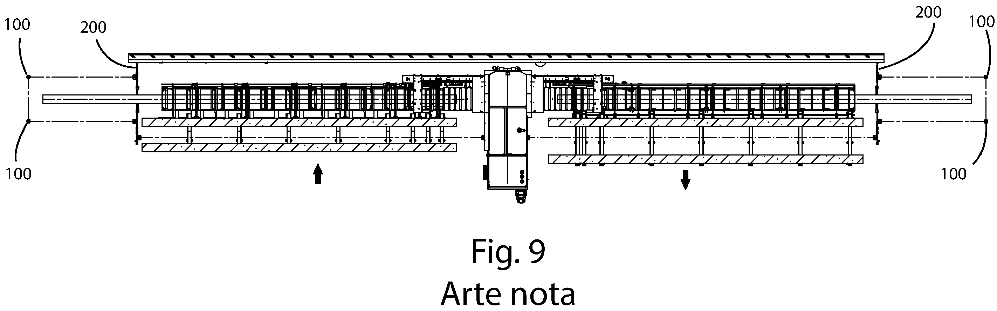

Furthermore, state-of-the-art machining machines carpentry beams present, as shown in figures 8 and 9, posts 100 arranged outside the working space of beams of standard size, in order to accommodate support devices for the portion of the beam exceeding the standard size for which the machine is designed. It appears clear that the presence of these posts 100 causes a constant bulk even when the operating conditions would not require it.

According to some embodiments, the control logic unit U comprises an automatic setting function to define the position of the protective lateral wall 4, 6, the opening or closing of the blocking mechanism 8, for example, by means of the activation of the latches 83, with each movement of the respective lateral protection 42, 62.

Said automatic setting function manages the setting of the system S based on the data detected by the sensors, for example magnetic cigarette sensors, which couple together and which are arranged in correspondence with some predetermined positions in which the walls 4, 6 can be arranged.

The operation of the machine M described above is as follows.

When it is necessary to machine a beam b using a carpentry machine M, the beam b to be machined is loaded onto said loading surface 1 and said beam b is moved along the X-direction, along which the machine M extends, for example from a loading surface 1 to an unloading surface 3. The movement of the beam b, in this step, goes from said loading surface 1 to a work cabin 2, which is connected to the loading surface 1 and is configured to perform one or more workings on said beam.

At this point, the beam b is worked using a tool with which said work cabin 2 is equipped and subsequently the beam b is moved along said X-direction from said work cabin 2 to said unloading surface 3.

At this point beam b is unloaded, i.e. when the work on the beam has been finalized by said unloading plan 3.

Although the process of loading, machining, and unloading a beam is sequential, it is possible to load a beam b onto loading plane 1 before a further machined beam b' has been unloaded from unloading plane 3.

Specifically, for the operation of machine M the steps described below are performed.

A0. arranging at least a first protective lateral wall 4 and a barrier 5, in correspondence with a loading surface 1, and/or arrange at least a further protective lateral wall 6 and a barrier 7 in correspondence with an unloading surface 3.

The (first) barrier 5 is arranged not parallel to said first protective lateral wall 4.

Similarly, the (further) barrier 7 is arranged not parallel to said further protective lateral wall 6.
A. detecting a distance between at least one of said barriers 5, 7 and a work cabin 2 placed between said loading surface 1 and said unloading surface 3.
B. measuring the main dimension of a beam b to be machined and/or machined b'.
C. determining if said distance between at least one of said barriers 5, 7 and said work cabin 2 is greater than the main dimension of said beam b or b'.

In particular, it is determined if the distance between barrier 5 and work cabin 2 is greater than beam b, and/or if the distance between barrier 7 and work cabin 2 is greater than beam b'.

D. moving at least one of said barriers 5, 7 by means of a positioning system S, so that said at least one of said barriers 5, 7 can assume a close position and one or more distanced positions.

Said close position is to be understood as a position in which said at least one of said barriers 5, 7 is arranged closer to said work cabin 2, while said one or more removed positions are positions in which said at least one barrier 5, 7 is distanced from said work cabin 2, i.e. it is located at a greater distance from said close position, depending on the main dimension of said beam b to be machined and/or machined b'.

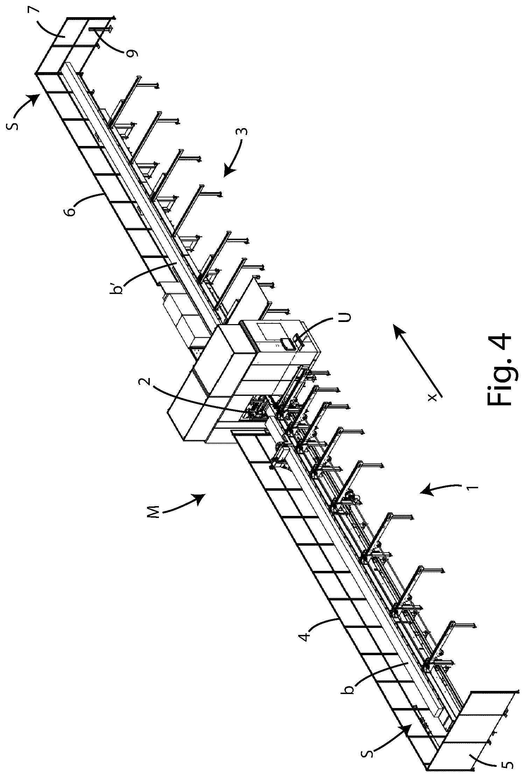

Referring to figure 4, both barriers 5 and 7 are arranged in said close position. In particular, they are found in the minimum size configuration, in which the machine is able to accommodate the b beam, which it was designed for.

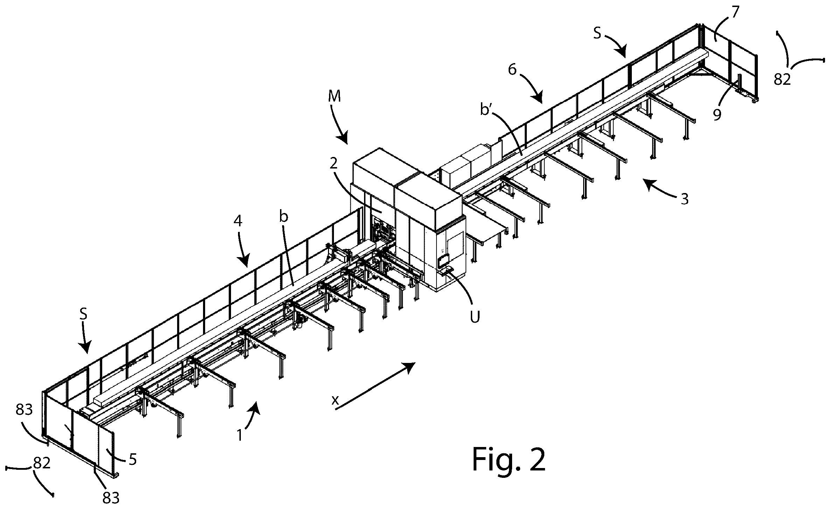

Referring to figure 2, the machine is in a configuration of intermediate size in which both said barriers are arranged at a greater distance from the work cabin 2 compared to the configuration of minimum size. This configuration is particularly useful when the beam exceeds the dimension for which the machine M was designed because it increases its dimension along X by a quantity sufficient to guarantee safety for the machine and the operator.

Finally, with reference to figure 1, the barrier 5 and the barrier 7 are arranged at the maximum possible distance from the work cabin 2, i.e. greater than the distance of each barrier from the work cabin 2 and greater than the distance of minimum overall dimensions and the distance of intermediate size.

According to some embodiments, the operating method involves blocking, by means of a blocking mechanism 8, the desired position of said at least one barrier 5, 7. In particular, it is possible to block one or both barriers in correspondence with one or more holes on the ground at a predetermined distance from the work cabin 2.

Where there is an blocking system 8 or 8', the method can include detecting the relative distance between a latch and the respective well through the use of an external sensor 92. In this way, the correct functioning of the blocking system is verified.

Furthermore, the method can comprise automatically determining a safety distance at which to position said at least one barrier 5, 7 and/or automatically detecting when said safety distance has been reached.

### Advantages

An advantage of the present invention is to provide a carpentry machine that is small in size and can be adapted if necessary to the size of the beam to be machined.

A further advantage of the present invention is to minimize the size of a machine for machining beams, in which it is possible to expand the loading area and/or the unloading area of the beams by moving one or more barriers that delimit the area occupied by the beam.

Another advantage is to allow the movement of one or more lateral walls protecting the loading and/or unloading area to reduce unwanted access points to the machine.

## Claims

1. Machine (M) for machining wooden beams or the like comprising
a loading platform (1) to load a beam (b) to be machined,
an unloading platform of said machined beam (b),
a work cabin (2), in which said beam (b) is machined, placed between said loading plane (1) and said unloading plane (3),
at least one protective lateral wall (4, 6) arranged near said loading platform (1) and/or said unloading platform (3), and
at least one barrier (5, 7) arranged not parallel to said at least one lateral wall (4, 6),
wherein said machine (M) is **characterized in that** it comprises a system (S) for positioning said at least one barrier (5, 7), wherein said positioning system (S) is capable of moving said at least one barrier (5, 7) so that it can assume a close position, wherein said at least one barrier (5, 7) is arranged at a predefined distance from said work cabin (2), and one or more distant positions, wherein said at least one barrier (5, 7) is further distanced from said work cabin (2).

2. Machine (M) according to the preceding claim,
wherein said at least one lateral wall (4, 6) comprises a first lateral wall (4), having a first fixed lateral protection (41), and a first movable lateral protection (42), wherein said first movable lateral protection (42) is coupled to said at least one barrier (5), and/or
a further lateral wall (6) having a further fixed lateral protection (61) and a further movable lateral protection (62), wherein said second movable lateral protection (62) is coupled to said at least one barrier (7), and each of said mobile lateral protections (42, 62) is telescopically coupled with the respective fixed lateral protection (41, 61).

3. Machine (M) according to the preceding claim,
wherein said positioning system (S) comprises means for sliding at least one of said two movable lateral protections (42, 62) with respect to each of said two fixed lateral protections (41, 61),
wherein said sliding means comprise a blocking mechanism (8) for said at least one of said movable lateral protections (42, 62) and for the respective barrier (5, 7), suitable for blocking said at least one barrier (5, 7) at a predetermined distance from said work cabin (2).

4. Machine (M) according to the preceding claim,
wherein said blocking mechanism (8) comprises one or more latches (83) capable of engaging with corresponding holes (82) obtained on the support surface of said machine (M),
wherein said support surface consists of a base or the ground.

5. Machine (M) according to any one of claims 3 or 4, wherein said means
for sliding at least one of said movable lateral protections (42, 62) comprise
a guide (80), arranged on said support surface, and
a stroke end (81) positioned at a certain distance from the work cabin (2).

6. Machine (M) according to any one of claims 3-5, wherein said means for sliding the movable lateral protections (42, 62) comprise a piston for activating the relative sliding of at least one of said two movable lateral protections (42, 62) with respect to the relative fixed protection (41, 61).

7. Machine (M) according to any one of claims 3-5, wherein said means for sliding the movable lateral protections (42, 62) comprise a cable capable of activating the sliding of said at least one of said movable lateral protections (42, 62) by rotating a pulley, to which said cable is operatively coupled.

8. Machine (M) according to any one of the preceding claims, comprising a logic control unit (U) configured to control the operation of said machine (M), wherein said system (S) comprises photocells (9) and/or at least one radio frequency identification device, and one or more visual and/or acoustic alarms, operationally connected to said logic control unit (U) and/or to said photocells (9), wherein said photocells (9) and/or said at least one identification device detect if the size of the beam (b) exceeds the maximum size allowed by the distance at which said at least one barrier (5, 7) is placed.

9. Operating method of a machine (M) for machining wooden beams or the like as defined in any one of the preceding claims, comprising the steps of:
A. detecting a distance between at least one of said barriers (5, 7) and said work cabin (2);
B. measuring the main dimension of a beam (b) to be machined and/or machined;
C. determining whether said distance between at least one of said barriers (5, 7) and said work cabin (2) is greater than the main dimension of said beam (b);
wherein said method is **characterized in that** it comprises the step of:
D. moving at least one of said barriers (5, 7) by means of said positioning system (S), so that said at least one of said barriers (5, 7) can assume a close position, wherein said at least one of said barriers (5, 7) is arranged closer to said work cabin (2), and one or more distant positions, wherein said at least one barrier (5, 7) is spaced from said work cabin (2) depending on the main size of said beam (b) to be worked and/or worked.

10. Method according to the preceding claim, when depending on any one of claims 3-8, wherein the step D of moving said at least one of said barriers (5, 7) comprises the sub-step of:
Q1. blocking, by means of said blocking mechanism (8), the desired position of said at least one barrier (5, 7).

11. Method according to any one of claims 9 or 10, wherein the step E of moving said at least one barrier (5, 7) ,comprises the sub-steps of:
D2. automatically determining a safety distance at which to position said at least one barrier (5, 7), and
D3. automatically detecting when said safety distance has been reached.

## Patentansprüche

1. Maschine (M) zur Bearbeitung von Holzbalken oder dergleichen, umfassend
eine Ladeplattform (1) zum Laden eines zu bearbeitenden Balkens (b),
eine Entladeplattform des besagten bearbeiteten Balkens (b),
eine Arbeitskabine (2), in der besagter Balken (b) bearbeitet wird, angeordnet zwischen besagter Ladeebene (1) und besagter Entladeebene (3), mindestens eine schützende Seitenwand (4, 6), die in der Nähe besagter Ladeplattform (1) und/oder besagter Entladeplattform (3) angeordnet ist, und
mindestens eine Barriere (5, 7), die nicht parallel zu besagter mindestens einen Seitenwand (4,6) angeordnet ist,
wobei besagte Maschine (M) **dadurch gekennzeichnet ist, dass** sie ein System (S) zur Positionierung besagter mindestens einen Barriere (5, 7) umfasst, wobei besagtes Positionierungssystem (S) in der Lage ist, besagte mindestens eine Barriere (5, 7) so zu bewegen, dass sie eine nahe Position einnehmen kann, in der besagte mindestens eine Barriere (5, 7) in einem vordefinierten Abstand von besagter Arbeitskabine (2) angeordnet ist, sowie eine oder mehrere entfernte Positionen, in denen besagte mindestens eine Barriere (5, 7) weiter von besagter Arbeitskabine (2) entfernt ist.

2. Maschine (M) nach dem vorhergehenden Anspruch, wobei besagte mindestens eine Seitenwand (4, 6) eine erste Seitenwand (4) umfasst, die eine erste feste Seitenschutzvorrichtung (41) und eine erste bewegliche Seitenschutzvorrichtung (42) aufweist, wobei die besagte erste bewegliche Seitenschutzvorrichtung (42) mit besagter mindestens einen Barriere (5) gekoppelt ist, und/oder
eine weitere Seitenwand (6), die eine weitere feste Seitenschutzvorrichtung (61) und eine weitere bewegliche Seitenschutzvorrichtung (62) aufweist, wobei besagte zweite bewegliche Seitenschutzvorrichtung (62) mit besagter mindestens einer Barriere (7) gekoppelt ist, und jede besagte bewegliche Seitenschutzvorrichtung (42, 62) teleskopisch mit der jeweiligen festen Seitenschutzvorrichtung (41, 61) gekoppelt ist.

3. Maschine (M) nach dem vorhergehenden Anspruch, wobei besagtes Positionierungssystem (S) Mittel zum Verschieben mindestens eines der besagten zwei beweglichen Seitenschutzvorrichtungen (42, 62) in Bezug auf jede der besagten zwei festen Seitenschutzvorrichtungen (41, 61) umfasst,
wobei besagte Verschiebemittel einen Blockiermechanismus (8) für besagte mindestens eine der beweglichen Seitenschutzvorrichtungen (42, 62) und für die jeweilige Barriere (5, 7) umfassen, der geeignet ist, besagte mindestens eine Barriere (5, 7) in einem vorbestimmten Abstand von besagter Arbeitskabine (2) zu blockieren.

4. Maschine (M) nach dem vorhergehenden Anspruch, wobei besagter Blockiermechanismus (8) einen oder mehrere Riegel (83) umfasst, die in der Lage sind, in entsprechende Löcher (82) einzugreifen, die auf der Auflagefläche besagter Maschine (M) angebracht sind, wobei besagte Auflagefläche aus einem Sockel oder dem Boden besteht.

5. Maschine (M) nach einem der Ansprüche 3 oder 4, wobei besagte Mittel zum Verschieben mindestens einer der besagten beweglichen Seitenschutzvorrichtungen (42, 62) eine Führung (80) umfasst, die auf besagter Auflagefläche angeordnet ist, und
ein Hubende (81), das in einem bestimmten Abstand von der Arbeitskabine (2) positioniert ist.

6. Maschine (M) nach einem der Ansprüche 3-5, wobei besagte Mittel zum Verschieben der beweglichen Seitenschutzvorrichtungen (42, 62) einen Kolben zum Aktivieren des relativen Verschiebens mindestens eines der besagten zwei beweglichen Seitenschutzvorrichtungen (42, 62) in Bezug auf die relative feste Schutzvorrichtung (41, 61) umfassen.

7. Maschine (M) nach einem der Ansprüche 3-5, wobei besagte Mittel zum Verschieben der beweglichen Seitenschutzvorrichtungen (42, 62) ein Kabel umfassen, das in der Lage ist, das Verschieben besagter mindestens einer der beweglichen Seitenschutzvorrichtungen (42, 62) durch Drehen einer Riemenscheibe zu aktivieren, mit der besagtes Kabel funktionsfähig gekoppelt ist.

8. Maschine (M) nach einem der vorhergehenden Ansprüche, umfassend eine logische Steuereinheit (U), die dazu konfiguriert ist, den Betrieb besagter Maschine (M) zu steuern, wobei besagtes System (S) Fotozellen (9) und/oder mindestens eine Funkfrequenz-Identifikationsvorrichtung sowie einen oder mehrere visuelle und/oder akustische Alarme umfasst, die betrieblich mit besagter logischer Steuereinheit (U) und/oder mit besagten Fotozellen (9) verbunden sind, wobei besagte Fotozellen (9) und/oder besagte mindestens eine Identifikationsvorrichtung erkennen, ob die Größe des Balkens (b) die zulässige Maximalgröße überschreitet, die durch den Abstand, in dem besagte mindestens eine Barriere (5, 7) platziert ist, zulässig ist.

9. Betriebsverfahren einer Maschine (M) zur Bearbeitung von Holzbalken oder dergleichen, wie in einem der vorhergehenden Ansprüche definiert, umfassend die Schritte:
A. Erfassen eines Abstands zwischen mindestens einer der besagten Barrieren (5, 7) und besagter Arbeitskabine (2);
B. Messen der Hauptabmessung eines zu bearbeitenden und/oder bearbeiteten Balkens (b);
C. Bestimmen, ob besagter Abstand zwischen mindestens einer der besagten Barrieren (5, 7) und besagter Arbeitskabine (2) größer ist als die Hauptabmessung besagten Balkens (b);
wobei besagtes Verfahren **dadurch gekennzeichnet ist, dass** es folgenden Schritt umfasst:
D. Bewegen mindestens einer der besagten Barrieren (5, 7) mittels des besagten Positionierungssystems (S), so dass besagte mindestens eine der besagten Barrieren (5, 7) eine nahe Position einnehmen kann, in der besagte mindestens eine der besagten Barrieren (5, 7) näher an besagter Arbeitskabine (2) angeordnet ist, sowie eine oder mehrere entfernte Positionen, in denen besagte mindestens eine Barriere (5, 7) in Abhängigkeit von der Hauptabmessung besagten zu bearbeitenden und/oder bearbeiteten Balkens (b) von besagter Arbeitskabine (2) beabstandet ist.

10. Verfahren nach dem vorhergehenden Anspruch, wenn abhängig von einem der Ansprüche 3-8, wobei der Schritt D des Bewegens besagter mindestens einer der besagten Barrieren (5, 7) den folgenden Teilschritt umfasst:
Q1. Blockieren der gewünschten Position besagter mindestens einen Barriere (5, 7) mittels besagtem Blockiermechanismus (8).

11. Verfahren nach einem der Ansprüche 9 oder 10, wobei der Schritt E des Bewegens besagter mindestens einen Barriere (5, 7) die folgenden Teilschritte umfasst:
D2. automatisches Bestimmen eines Sicherheitsabstands, in dem besagte mindestens eine Barriere (5, 7) zu positionieren ist; und
D3, automatisches Erkennen, wann besagter Sicherheitsabstand erreicht wurde.

## Revendications

1. Machine (M) destinée à usiner des poutres en bois ou analogues, comprenant
une plateforme de chargement (1) destinée à charger une poutre (b) à usiner,
une plateforme de déchargement de ladite poutre usinée (b),
une cabine de travail (2), dans laquelle ladite poutre (b) est usinée, disposée entre ladite plateforme de chargement (1) et ladite plateforme de déchargement (3),
au moins une paroi latérale de protection (4, 6) disposée à proximité de ladite plateforme de chargement (1) et/ou de ladite plateforme de déchargement (3), et
au moins une barrière (5, 7) disposée non parallèlement à ladite au moins une paroi latérale (4, 6),
dans laquelle ladite machine (M) est **caractérisée en ce qu'**elle comprend un système (S) de positionnement de ladite au moins une barrière (5, 7), ledit système de positionnement (S) étant apte à déplacer ladite au moins une barrière (5, 7) de manière à ce que celle-ci puisse adopter une position rapprochée, dans laquelle ladite au moins une barrière (5, 7) est disposée à une distance prédéfinie de ladite cabine de travail (2), et une ou plusieurs positions éloignées, dans lesquelles ladite au moins une barrière (5, 7) est davantage éloignée de ladite cabine de travail (2).

2. Machine (M) selon la revendication précédente, dans laquelle ladite au moins une paroi latérale (4, 6) comprend une première paroi latérale (4) présentant une première protection latérale fixe (41) et une première protection latérale mobile (42), dans laquelle ladite première protection latérale mobile (42) est couplée à ladite au moins une barrière (5), et/ou
une paroi latérale supplémentaire (6) présentant une protection latérale fixe supplémentaire (61) et une protection latérale mobile supplémentaire (62), dans laquelle ladite deuxième protection latérale mobile (62) est couplée à ladite au moins une barrière (7), et chacune desdites protections latérales mobiles (42, 62) est couplée de manière télescopique avec la protection latérale fixe correspondante (41, 61).

3. Machine (M) selon la revendication précédente, dans laquelle ledit système de positionnement (S) comprend des moyens de coulissement d'au moins l'une desdites deux protections latérales mobiles (42, 62) par rapport à chacune desdites deux protections latérales fixes (41, 61),
dans laquelle lesdits moyens de coulissement comprennent un mécanisme de blocage (8) destiné à ladite au moins une protection latérale mobile (42, 62) et à la barrière correspondante (5, 7), adapté pour bloquer ladite au moins une barrière (5, 7) à une distance prédéterminée de ladite cabine de travail (2).

4. Machine (M) selon la revendication précédente,
dans laquelle ledit mécanisme de blocage (8) comprend un ou plusieurs loquets (83) aptes à s'engager avec des trous correspondants (82) réalisés sur la surface de support de ladite machine (M),
dans laquelle ladite surface de support est constituée par une base ou par le sol.

5. Machine (M) selon l'une quelconque des revendications 3 ou 4, dans laquelle lesdits moyens de coulissement d'au moins l'une desdites protections latérales mobiles (42, 62) comprennent un guide (80), disposé sur ladite surface de support, et
une butée de fin de course (81) positionnée à une certaine distance de la cabine de travail (2).

6. Machine (M) selon l'une quelconque des revendications 3-5, dans laquelle lesdits moyens de coulissement des protections latérales mobiles (42, 62) comprennent un piston destiné à actionner le coulissement relatif d'au moins l'une desdites deux protections latérales mobiles (42, 62) par rapport à la protection fixe correspondante (41, 61).

7. Machine (M) selon l'une quelconque des revendications 3-5, dans laquelle lesdits moyens de coulissement des protections latérales mobiles (42, 62) comprennent un câble apte à actionner le coulissement de ladite au moins une desdites protections latérales mobiles (42, 62) par rotation d'une poulie à laquelle ledit câble est couplé fonctionnellement.

8. Machine (M) selon l'une quelconque des revendications précédentes, comprenant une unité logique de commande (U) configurée pour commander le fonctionnement de ladite machine (M), dans laquelle ledit système (S) comprend des cellules photoélectriques (9) et/ou au moins un dispositif d'identification par radiofréquence, ainsi qu'une ou plusieurs alarmes visuelles et/ou acoustiques, reliées fonctionnellement à ladite unité logique de commande (U) et/ou auxdites cellules photoélectriques (9), dans laquelle lesdites cellules photoélectriques (9) et/ou ledit au moins un dispositif d'identification détectent si la dimension de la poutre (b) dépasse la dimension maximale autorisée par la distance à laquelle ladite au moins une barrière (5, 7) est positionnée.

9. Procédé de fonctionnement d'une machine (M) destinée à usiner des poutres en bois ou analogues telle que définie dans l'une quelconque des revendications précédentes, comprenant les étapes consistant à:
A. détecter une distance entre au moins l'une desdites barrières (5, 7) et ladite cabine de travail (2);
B. mesurer la dimension principale d'une poutre (b) à usiner et/ou usinée;
C. déterminer si ladite distance entre au moins l'une desdites barrières (5, 7) et ladite cabine de travail (2) est supérieure à la dimension principale de ladite poutre (b);
dans lequel ledit procédé est **caractérisé en ce qu'**il comprend l'étape consistant à:
D. déplacer au moins l'une desdites barrières (5, 7) au moyen dudit système de positionnement (S), de sorte que ladite au moins une barrière (5, 7) puisse adopter une position rapprochée, dans laquelle ladite au moins une barrière (5, 7) est disposée plus près de ladite cabine de travail (2), et une ou plusieurs positions éloignées, dans lesquelles ladite au moins une barrière (5, 7) est espacée de ladite cabine de travail (2) en fonction de la dimension principale de ladite poutre (b) à usiner et/ou usinée.

10. Procédé selon la revendication précédente, lorsqu'il dépend de l'une quelconque des revendications 3-8, dans lequel l'étape D de déplacement de ladite au moins une barrière (5, 7) comprend la sous-étape consistant à:
Q1. bloquer, au moyen dudit mécanisme de blocage (8), la position souhaitée de ladite au moins une barrière (5, 7).

11. Procédé selon l'une quelconque des revendications 9 ou 10, dans lequel l'étape E de déplacement de ladite au moins une barrière (5, 7) comprend les sous-étapes consistant à:
D2. déterminer automatiquement une distance de sécurité à laquelle positionner ladite au moins une barrière (5, 7); et
D3, détecter automatiquement lorsque ladite distance de sécurité a été atteinte.
